# EUROPÄISCHE PATENTANMELDUNG

(11) **EP 0 740 484 A2**
(43) Veröffentlichungstag der Anmeldung: **30.10.1996**
(21) Anmeldenummer: 96105874.0
(22) Anmeldetag: 15.04.1996
(51) Int. Cl.: H04Q 7/38

(54) **Verfahren zum Aufbau einer Anrufverbindung für Anrufe an einen Funkteilnehmer**

(30) Priorität: 27.04.1995 DE 19515558
(71) Anmelder: SIEMENS AKTIENGESELLSCHAFT, 80333 München (DE)
(72) Erfinder: Becher, Reinhard, Dr., 81245 München (DE)

(57) **Zusammenfassung**

Bei Empfang einer Aufenthaltsabfrage (SRI) überprüft die zentrale Teilnehmerdatenbasis (HLR) im Heimat-Mobilfunknetz des Funkteilnehmers, ob die abfragende Vermittlungseinrichtung (GMSC1) das gesamte Dienstespektrum unterstützen kann, und sendet bei negativem Prüfungsergebnis eine Anfrage (PRN), enthaltend eine Zusatzinformation (RRI) und die Funkteilnehmerrufnummer (MSISDN) des angerufenen Funkteilnehmers, an eine dezentrale Teilnehmerdatenbasis (z.B. VLR2) aus, die zu einer das Dienstespektrum unterstützenden und zum Empfang ankommender Anrufe vorgesehenen Mobilvermittlungsstelle (z.B. GMSC2) gehört. Beide Informationen werden in der dezentralen Teilnehmerdatenbasis (z.B. VLR2) gespeichert, die als Antwort auf die Anfrage (PRN) eine Mobilitätsnummer (MSRN) mit einem Verweis auf die gespeicherten Informationen zurücksendet. Sobald eine den Aufbau der Anrufverbindung auslösende Nachricht (IAM) mit der auf die Zusatzinformation (RRI) verweisenden Mobilitätsnummer (MSRN) im Heimat-Mobilfunknetz empfangen wird, richtet die Mobilvermittlungsstelle (z.B. GMSC2) eine zweite Aufenthaltsabfrage (SRI') mit der gespeicherten Funkteilnehmerrufnummer an die zentrale Teilnehmerdatenbasis. Mit der auf die erneute Aufenthaltsabfrage bereitgestellten Mobilitätsnummer wird von der Mobilvermittlungsstelle die Anrufverbindung aufgebaut.

## Beschreibung

Die Erfindung betrifft ein Verfahren zum Aufbau einer Anrufverbindung für Anrufe an einen Funkteilnehmer gemäß dem Oberbegriff des Patentanspruchs 1.

Im länderübergreifenden GSM-Mobilfunksystem (Global System for Mobile Communication) mit mehreren Mobilfunknetzen unterschiedlicher Netzbetreiber gelangen Anrufe, die von einem Teilnehmer eines Festnetzes oder eines Mobilfunknetzes von außerhalb des Heimat-Mobilfunknetzes des angerufenen Funkteilnehmers initiiert werden, über internationale Telekommunikationsnetze zu einer für den angerufenen Funkteilnehmer zuständigen Mobilvermittlungsstelle (Gateway Mobil Switching Center) in dessen Heimat-Mobilfunknetz. Die Mobilvermittlungsstelle startet eine Aufenthaltsabfrage an eine zentrale Teilnehmerdatenbasis (Home Location Register), von der eine Anfrage (Provide Roaming Number) zur Übermittlung einer Mobilitätsnummer (Mobil Subscriber Roaming Number) an eine für den angerufenen Funkteilnehmer aktuell zuständige dezentrale Teilnehmerdatenbasis (Visitor Location Register) gerichtet wird.

Die Einführung von nicht genormten netzbetreiberspezifischen Diensten in den einzelnen Ländern des GSM-Mobilfunknetzes führt zu neuen Anforderungen an die Netzeinrichtungen, insbesonder an die Mobilvermittlungsstellen und Teilnehmerdatenbasen. Bedingt durch mehrere Netzbetreiber - auch innerhalb eines GSM-Landes - kann es vorkommen, daß nicht alle Mobilvermittlungsstellen in dem Netz oder in den Netzen die gesamten netzbetreiberspezifischen Dienste eines Dienstespektrums, was von der für die im Netz jeweils ankommenden Anrufe vorgesehenen Mobilvermittlungsstelle (Gateway Mobil Switching Center) gefordert wird, unterstützen.

Bei einer optimierten Verbindung (Optimized Routing) beispielsweise kann die Aufenthaltsabfrage aus einem fremden Netz direkt an die zentrale Teilnehmerdatenbasis im Heimat-Mobilfunknetz des angerufenen Funkteilnehmers gerichtet werden. Ist der anrufende Teilnehmer ein Festnetzteilnehmer, so ist auch eine Aufenthaltsabfrage aus dem Festnetz möglich, sofern zwischen den beiden Netzen die Möglichkeit der optimierten Verbindung vereinbart ist. Die direkte Verbindung kann aber nicht genutzt werden, wenn der angerufene Funkteilnehmer als Teilnehmer eines intelligenten Netzes mit der Möglichkeit der Nutzung entsprechender Dienste im intelligenten Netz behandelt wird. Das Zusammenwirken von Einrichtungen des GSM-Mobilfunknetzes mit Einrichtungen eines intelligenten Netzes ist netzspezifisch, so daß die Nutzung von Diensten im intelligenten Netz nur zwischen dem jeweiligen landeseigenen Mobilfunknetz und den Einrichtungen des intelligenten Netzes möglich ist. Eine ist nicht realisiert.

Aufgabe der vorliegenden Erfindung ist es, ein Verfahren zum Aufbau einer Anrufverbindung für Anrufe an einen Funkteilnehmer zu schaffen, durch das eine netzübergreifende einheitliche Behandlung netzspezifischer Dienste möglich ist.

Diese Aufgabe wird erfindungsgemäß durch die Merkmale des Patentanspruchs 1 gelöst. Weiterbildungen der Erfindung sind in den Unteransprüchen angegeben.

Bei Empfang der Aufenthaltsabfrage überprüft die zentrale Teilnehmerdatenbasis, ob die abfragende Vermittlungseinrichtung das gesamte Dienstespektrum unterstützen kann, und sendet bei negativem Prüfungsergebnis eine Anfrage, enthaltend eine Zusatzinformation und die Funkteilnehmerrufnummer des angerufenen Funkteilnehmers, an eine dezentrale Teilnehmerdatenbasis aus, die zu einer das Dienstespektrum unterstützender und zum Empfang ankommender Anrufe vorgesehenen Mobilvermittlungsstelle gehört. Beide Informationen werden in der dezentralen Teilnehmerdatenbasis gespeichert, die als Antwort auf die Anfrage eine Mobilitätsnummer mit einem Verweis auf die gespeicherten Informationen zurücksendet. Sobald eine den Aufbau der Anrufverbindung auslösende Nachricht mit der auf die Zusatzinformation verweisenden Mobilitätsnummer im Heimat-Mobilfunknetz empfangen wird, richtet die Mobilvermittlungsstelle eine zweite Aufenthaltsabfrage mit der gespeicherten Funkteilnehmerrufnummer an die zentrale Teilnehmerdatenbasis. Mit der auf die erneute Aufenthaltsabfrage bereitgestellten Mobilitätsnummer wird von der Mobilvermittlungsstelle die Anrufverbindung aufgebaut.

Durch die Erfindung können einem angerufenen Funkteilnehmer netzübergreifend und unabhängig von den individuellen netzbetreiberspezifischen Diensten ein Dienstespektrum, bestehend aus mehreren Diensten, einheitlich zur Verfügung gestellt werden. Die Anrufverbindung wird von einer das Dienstespektrum unterstützenden Mobilvermittlungsstelle aufgebaut, nachdem der im Mobilfunknetz ankommende Anruf durch Aussenden der Zusatzinformation in der Anfrage und durch Starten einer zweiten Aufenthaltsabfrage, die eine Übermittlung der Mobilitätsnummer mit Verweis auf die Zusatzinformation zur Folge hat, dorthin umgeleitet wurde.

Gemäß einer Weiterbildung der Erfindung wird bei Aufenthalt des angerufenen Funkteilnehmers in dessen Heimat-Mobilfunknetz die Anfrage mit der Zusatzinformation an die für den Funkteilnehmer aktuell zuständige dezentrale Teilnehmerdatenbasis gerichtet, die zu einer das Dienstespektrum unterstützenden Mobilvermittlungsstelle gehört.

Gemäß einer anderen Weiterbildung der Erfindung wird bei Aufenthalt des angerufenen Funkteilnehmers in einem fremden Mobilfunknetz oder in einem Aufenthaltsgebiet des Heimat-Mobilfunknetzes mit eingeschränkter Unterstützung des Dienstespektrums durch die zugehörige Mobilvermittlungsstelle die Anfrage mit der Zusatzinformation an eine definierte dezentrale Teilnehmerdatenbasis im eigenen Mobilfunknetz gerichtet, die zu einer das Dienstespektrum unterstützenden Mobilvermittlungsstelle gehört.

Die Überprüfung der abfragenden Vermittlungseinrichtung auf Unterstützung des Dienstespektrums wird gemäß einer Weiterbildung der Erfindung durch Vergleich einer in der Aufenthaltsabfrage übermittelten Adresse zur Kennzeichnung der Vermittlungseinrichtung des anrufenden Teilnehmers mit einer in der zentralen Teilnehmerdatenbasis gespeicherten Adresse zur Kennzeichnung einer das Dienstespektrum unterstützenden Vermittlungseinrichtung durchgeführt. Von Vorteil ist es, wenn die zentrale Teilnehmerdatenbasis zu Vergleichszwecken eine Liste der Mobilvermittlungsstellen enthält, die das Dienstespektrum unterstützen.

Von Vorteil ist es, wenn die Zusatzinformation aus einer virtuellen internationalen Funkteilnehmerrufnummer besteht, die keinem realen Funkteilnehmer zugeordnet werden kann.

Die Erfindung wird anhand eines in Figuren dargestellten Ausführungsbeispiels erläutert.

Im einzelnen zeigen:
- Fig. 1: ein Blockschaltbild zum Aufbau einer Anrufverbindung bei einem Anruf aus einem fremden Netz und Aufenthalt des angerufenen Funkteilnehmers in seinem Heimat-Mobilfunknetz,
- Fig. 2: ein Blockschaltbild zum Aufbau einer Anrufverbindung bei einem Anruf aus einem fremden Netz und Aufenthalt des angerufenen Funkteilnehmers in einem anderen Netz,
- Fig. 3: ein Blockschaltbild zum Aufbau einer Anrufverbindung bei einem Anruf aus dem Heimat-Mobilfunknetz und Aufenthalt des angerufenen Funkteilnehmers in seinem Heimat-Mobilfunknetz und
- Fig. 4: ein Blockschaltbild zum Aufbau einer Anrufverbindung bei einem Anruf aus dem Heimat-Mobilfunknetz und Aufenthalt des angerufenen Funkteilnehmers in einem anderen Netz.

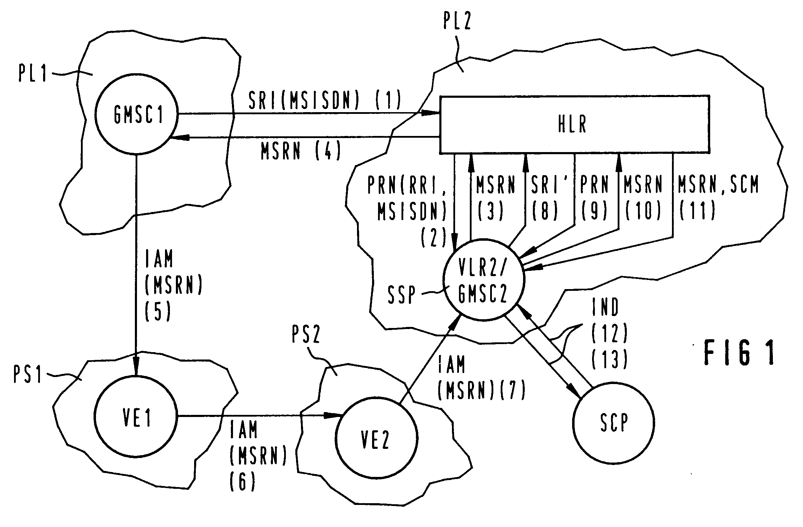

Figur 1 zeigt das Blockschaltbild zum Aufbau einer Anrufverbindung bei einem Anruf, der von einem Funkteilnehmer aus einem Mobilfunknetz PL1 initiiert und an einen Funkteilnehmer in einem Heimat-Mobilfunknetz PL2, in dem der Funkteilnehmer registriert wird, gerichtet ist. Von den beiden Mobilfunknetzen PL1 und PL2 werden unterschiedliche Mobilfunkgebiete mit jeweils eigenem Netzbetreiber in dem länderübergreifenden GSM-Mobilfunksystem (Global System for Communication) abgedeckt. Es soll eine optimierte Verbindung (Optimized Routing) zwischen dem anrufenden Funkteilnehmer und dem angerufenen Funkteilnehmer - also zwischen beiden Mobilfunknetzen PL1 und PL2 - als vereinbart gelten, sodaß aus dem fremden Netz PL1 eine Aufenthaltsabfrage (Interrogation) unmittelbar an eine zentrale Teilnehmerdatenbasis (HLR) im Mobilfunknetz PL2 des angerufenen Funkteilnehmers gerichtet werden kann. Ist der anrufende Teilnehmer ein Festnetzteilnehmer, so ist auch eine Aufenthaltsabfrage aus dem zugehörigen Festnetz möglich, sofern zwischen den beiden Netzen die Nutzung der optimierten Verbindung vereinbart ist.

Die Aufenthaltsabfrage SRI mit der dem angerufenen Funkteilnehmer zugeordneten internationalen Funkteilnehmerrufnummer MSISDN wird von einer im Mobilfunknetz PL1 an der Schnittstelle zu anderen Netzen angeordneten Mobilvermittlungsstelle GMSC1 (Gateway Mobil Switching Center) zu der zentralen Teilnehmerdatenbasis HLR (Home Local Register) im Mobilfunknetz PL2 ausgesendet (1). Das Mobilfunknetz PL2 ist das Heimat-Mobilfunknetz des angerufenen Funkteilnehmers, in dem die zentrale Teilnehmerdatenbasis HLR zur Speicherung der Teilnehmerdaten aller im Mobilfunknetz registrierten Funkteilnehmer angeordnet ist. Mit der Aufenthaltsabfrage SRI werden von der abfragenden Mobilvermittlungsstelle GMSC1 auch die Adresse de des anrufenden Funkteilnehmers und der abfragenden Mobilvermittlungsstelle GMSC1 übertragen, um unterscheiden zu können, ob die abfragende Mobilvermittlungsstelle aus der Sicht des angerufenen Funkteilnehmers im eigenen Mobilfunknetz angeordnet ist oder nicht.

In der zentralen Teilnehmerdatenbasis HLR ist für jeden Funkteilnehmer ein Steuerzeichen reserviert, das angibt, ob von dem jeweiligen Funkteilnehmer ein bestimmter Dienst wie beispielsweise die optimierte Verbindung oder mehrere Dienste eines Dienstespektrums genutzt werden können. Das gesamte Dienstespektrum oder ein Leistungsmerkmal kann auch nur für das Mobilfunknetz im jeweiligen GSM-Land festgelegt sein und soll dennoch bei einem Anruf aus einem fremden Netz über die Netzgrenze hinweg genutzt werden. Ein Beispiel für ein Leistungsmerkmal (CAMEL) zur Unterstützung von netzbetreiberspezifischen Diensten ist aus "The CAMEL feature, proposed revisions to the stage 1 description", von ETSI/STC/SMG1, 14.03.95, GSM 02.78, Version 0.4.0, Seiten 1-19 bekannt. Die zentrale Teilnehmerdatenbasis HLR verfügt über eine Liste von Mobilvermittlungsstellen, von denen beispielsweise dieses Leistungsmerkmal unterstutzt wird.

Die zentrale Teilnehmerdatenbasis HLR überprüft anhand der in der Aufenthaltsabfrage SRI übermittelten Informationen die abfragende Mobilvermittlungsstelle GMSC1, ob die Aufenthaltsabfrage von außerhalb des Mobilfunknetzes PL2 oder von einer Mobilvermittlungsstelle im Mobilfunknetz PL2, für die eine eingeschränkte Funktionalität bezüglich der Unterstützung des gesamten Dienstespektrums festgestellt werden kann, ausgelöst wurde. Die Überprüfung erfolgt durch Vergleich der empfangenen Adresse mit der in der Liste gespeicherten Adresse.

Wenn der angerufene Funkteilnehmer sich in einem lokalen Aufenthaltsgebiet befindet, das von einer Mobilvermittlungsstelle GMSC2 mit zugehöriger dezentraler Teilnehmerdatenbasis VLR2 im Heimat-Mobilfunknetz PL2 betreut wird, und diese Mobilvermittlungsstelle GMSC2 das gesamte Dienstespektrum unterstützt, wird von der zentralen Teilnehmerdatenbasis HLR eine Anfrage PRN zur dezentralen Teilnehmerdatenbasis VLR2 ausgesendet (2). Mit der Anfrage PRN wird eine Zusatzinformation RRI und die von der abfragenden Mobilvermittlungsstelle GMSC1 übermittelte internationale Funkteilnehmerrufnummer MSISDN des angerufenen Funkteilnehmers mitübertragen. Die Zusatzinformation RRI und die Funkteilnehmerrufnummer MSISDN werden in der dezentralen Teilnehmerdatenbasis VLR2 gespeichert, von der eine Mobilitätsnummer MSRN zur Festlegung des Aufenthaltsorts des angerufenen Funkteilnehmers als Antwort auf die Anfrage zur zentralen Teilnehmerdatenbasis HLR rückgesendet (3) wird. Dabei wird in einer mehrere Mobilitätsnummern enthaltenden Tabelle der dezentralen Teilnehmerdatenbasis VLR2 ein Eintrag erstellt, der auf die gespeicherte Zusatzinformation RRI und die gespeicherte Funkteilnehmerrufnummer MSISDN zeigt.

Nach Empfang der Mobiltätsnummer MSRN leitet die zentrale Teilnehmerdatenbasis HLR diese Nummer zur abfragenden Mobilvermittlungsstelle GMSC1 weiter (4). Eine Nachricht IAM (Initial Address Message), enthaltend die Mobilitätsnummer MSRN, zum Start des Aufbaus der Anrufverbindung wird von der Mobilvermittlungsstelle GMSC1 zu einer Vermittlungseinrichtung VE1 in einem Festnetz PS1 ausgesendet (5). Das Festnetz PS1 ist das öffentliche Fernsprechnetz, das im Land des Mobilfunknetzes PL1 existiert. Ebenso gibt es ein im Land des Mobilfunknetzes PL2 vorhandenes Festnetz PS2, das ebenfalls von einem öffentlichen Fernsprechnetz gebildet wird. Im Festnetz PS2 ist eine Vermittlungseinrichtung VE2 angeordnet, die die Nachricht IAM mit der Funkteilnehmerrufnummer MSRN empfängt (6) und an die Mobilvermittlungsstelle GMSC2 im Mobilfunknetz PL2 weiterleitet (7). Somit ist von dem Mobilfunknetz PL1 über die beiden Festnetze PS1 und PS2 zum Mobilfunknetz PL2 eine Anrufverbindung iniiert worden.

Da die in der Mobilvermittlungsstelle GMSC2 eintreffende Mobililtätsnummer MSRN auf die in der zugehörigen Teilnehmerdatenbasis VLR2 gespeicherte Zusatzinformation RRI zeigt - erkennbar an dem Inhalt der Mobiliätsnummern-Tabelle - , wird eine zweite Aufenthaltsabfrage SRI' zur zentralen Teilnehmerdatenbasis HLR ausgesendet. Die erneute Aufenthaltsabfrage SRI' enthält die in der dezentralen Teilnehmerdatenbasis VLR2 gespeicherte internationale Funkteilnehmerrufnummer MSISDN. Die Mobilvermittlungsstelle GMSC2 ist eine Vermittlungseinrichtung im Heimat-Mobilfunknetz PL2 des angerufenen Funkteilnehmers, von der das gesamte Dienstespektrum mit den netzspezifischen Funktionen und Diensten unterstützt wird.

Von der Teilnehmerdatenbasis HLR wird aufgrund der zweiten Aufenthaltsabfrage SRI' nochmals eine Anfrage PRN an die Teilnehmerdatenbasis VLR2 gerichtet (9), sodaß als Rückantwort die Mobilitätsnummer MSRN zur Teilnehmerdatenbasis HLR ausgesendet wird (10). Die Mobilitätsnummer MSRN wird zusammen mit einer Dienstekennung SCM zur Mobilvermittlungsstelle GMSC2 übertragen (11). An der eintreffenden Dienstekennung SCM erkennt die Mobilvermittlungsstelle GMSC2, daß eine Verzweigung zu einer Dienstesteuerungseinheit SCP eines intelligenten Netzes durchzuführen ist, um von der Dienstesteuerungseinheit SCP Informationen zur Nutzung von Diensten des intelligenten Netzes an die Vermittlungseinrichtung im Mobilfunknetz PL2 zu übermitteln. Da ein Mobilfunknetz nach dem GSM-Standard die Struktur eines intelligenten Netzes unterstützt und somit die Mobilvermittlungsstelle GMSC2 als Dienstevermittlungseinheit SSP eines intelligenten Netzes aufgefaßt werden kann, werden Informationen IND zur Dienstesteuerungseinheit SCP ausgesendet (12) und in der Gegenrichtung von der Dienstesteuerungseinheit SCP empfangen (13).

Die Bereitstellung der Dienstekennung SCM von der zentralen Teilnehmerdatenbasis HLR, in der die Dienstekennung SCM als teilnehmerindividuelles Teilnehmerdatum eingetragen ist, und der nachfolgende Dialog mit der Steuerungseinheit SCP des intelligenten Netzes dient zur Nutzung von Diensten des intelligenten Netzes für Funkteilnehmer eines Mobilfunknetzes. Dadurch können die im Mobilfunknetz für Funkteilnehmer eingereichteten Dienste (Supplementary Services) mit Diensten des intelligenten Netzes zu einem erweiterten Dienstepaket verknüpft und netzübergreifend genutzt werden.

Die Zusatzinformation RRI, die in der Anfrage PRN zusammen mit der internationalen Funkteilnehmerrufnummer MSISDN des angerufenen Funkteilnehmers zur dezentralen Teilnehmerdatenbasis VLR2 gesendet wird, besteht entweder aus einer virtuellen Funkteilnehmerrufnummer oder aus einem neuen Parameter, der als zusätzliche Information zur Kennzeichnung des Wunsches nach erneuter Aufenthaltsabfrage innerhalb des Heimat-Mobilfunknetzes des angerufenen Funkteilnehmers dient. In der dezentralen Teilnehmerdatenbasis VLR2 kann für die empfangene Zusatzinformation RRI ein Steuerzeichen gesetzt werden, daß bei der Auswertung der Ziffern der Funkteilnehmerrufnummer ausgewertet wird. Ist das Steuerzeichen besetzt, so wird die abgespeicherte Funkteilnehmerrufnummer MSISDN ausgelesen und eine erneute Ziffernbewertung mit dem Ergebnis der erneuten Aufenthaltsabfrage SRI' durchgeführt.

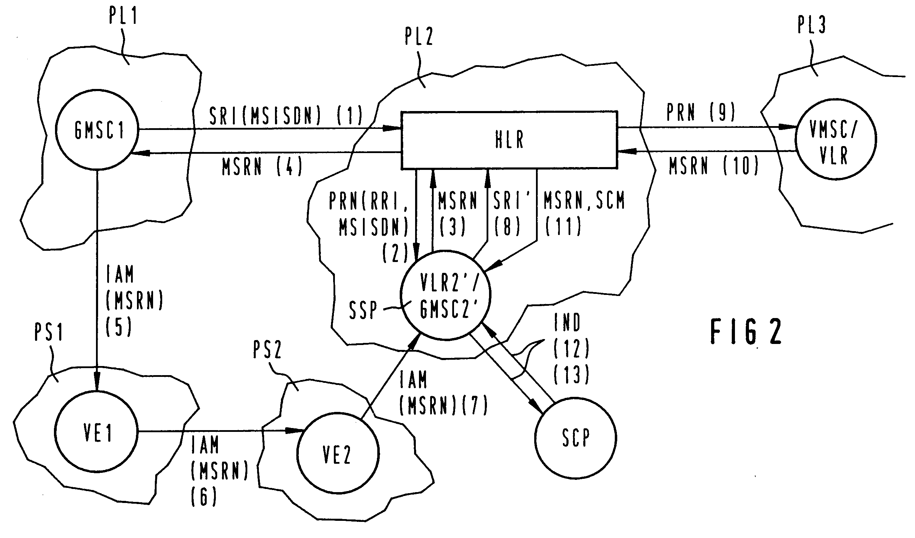

Figur 2 zeigt das Blockschaltbild zum Aufbau einer Anrufverbindung bei einem aus den Mobilfunknetz PL1 ankommenden Anruf, der an einen Funkteilnehmer gerichtet ist, der sich außerhalb seines Heimat-Mobilfunknetzes PL2 in einem fremden Mobilfunknetz PL3 befindet. In diesem Fall sendet die zentrale Teilnehmerdatenbasis HLR die Anfrage PRN mit der Zusatzinformation RRI und der internationalen Funkteilnehmernummer MSISDN an eine definierte Mobilvermittlungsstelle GMSC2' mit zugehöriger dezentraler Teilnehmerdatenbasis VLR2', von der laut der in der Teilnehmerdatenbasis HLR enthaltenen Liste das gesamte Dienstespektrum unterstützt werden kann. Gleichfalls wird eine geeignete Mobilvermittlungsstelle im Heimat-Mobilfunknetz PL2 des angerufenen Funkteilnehmers für die Anfrage PRN ausgewählt, wenn sich der angerufene Funkteilnehmer in einem Aufenthaltsgebiet befindet, dessen Mobilvermittlungsstelle eine eingeschränkte Funktionalität bezüglich des gesamten Dienstespektrums aufweist.

In der Liste kann beispielsweise auch für die Funktion der direkten Anrufverbindung (Optimized Routing) eine dafür geeignete dezentrale Teilnehmerdatenbasis pro zentraler Teilnehmerdatenbasis und pro fremden Mobilfunknetz eingetragen sein , sofern zwischen den Netzen eine Vereinbarung zur Durchführung dieser Funktion gegeben ist. Der weitere Ablauf des Verbindungsaufbaus ist identisch mit den im Prinzipschaltbild von Figur 1 angegebenen Maßnahmen (3) und (4) während der Signalisierung sowie (5, 6) und (7) im Rahmen der Wegedurchschaltung (Routing). Die aus der Liste ausgewählte Mobilvermittlungsstelle GMSC2' empfängt die Nachricht IAM mit der Mobilitätsnummer MSRN und initiiert aufgrund der in der dezentralen Teilnehmerdatenbasis VLR2' gespeicherten Zusatzinformation RRI und Funkteilnehmerrufnummer MSISDN, auf die die empfangene Mobilitätsnummer MSRN verweist, die zweite Aufenthaltsabfrage SRI' (8). Mit der erneuten Aufenthaltsabfrage SRI' an die zentrale Teilnehmerdatenbasis HLR wird die gespeicherte Funkteilnehmerrufnummer MSISDN des angerufenen Funkteilnehmers ausgesendet.

Von der Teilnehmerdatenbasis HLR wird eine Anfrage PRN an das Mobilfunknetz PL3 mit der für den angerufenen Funkteilnehmer aktuell zuständigen Mobilvermittlungsstelle VMSC und der zugehörigen dezentralen Teilnehmerdatenbasis VLR gerichtet (9), die als Antwort auf die Anfrage PRN die den Aufenthaltsort des angerufenen Funkteilnehmers festlegenede Mobilitätsnummer MSRN zur Teilnehmerdatenbasis HLR zurücksendet (10). Die Mobilvermittlungsstelle VMSC und die dezentrale Teilnehmerdatenbasis VLR betreuen ein lokales Aufenthaltsgebiet, das im anderen Mobilfunknetz PL3 als dem Heimat-Mobilfunknetz PL2 des angerufenen Funkteilnehmers liegt und in dem sich der angerufene Funkteilnehmer sich momentan befindet. Der weitere Verbindungsaufbau erfolgt, wie im Prinzipschaltbild nach Figur 1 angegeben. Dies bedeutet, daß über die zur Unterstützung des gesamten Dienstespektrums definierte Mobilvermittlungsstelle GMSC2' im Mobilfunknetz PL2 eine Verbindung zu der Dienstesteuerungseinheit SCP des intelligenten Netzes hergestellt wird, um die Dienste des intelligenten Netzes nutzen zu können. Die Verzweigung wird auf Grund der von der zentralen Teilnehmerdatenbasis HLR übermittelten Dienstekennung SCM durchgeführt, und ein Dialog zwischen der als Dienstevermittlungseinheit aufzufassenden Mobilvermittlungsstelle GMSC2' und der Dienstesteuerungseinheit SCP geführt.

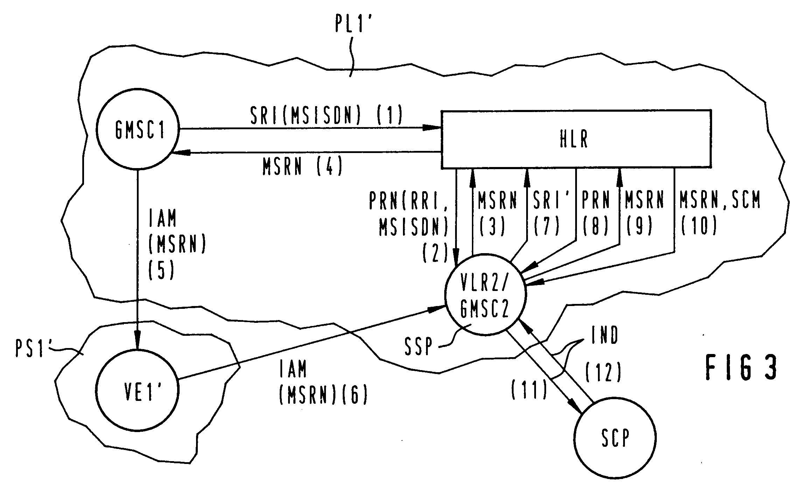

Figur 3 zeigt das Prinzipschaltbild zum Aufbau einer Anrufverbindung bei einem Anruf, der innerhalb eines einzigen Mobilfunknetzes PL1' von einem anrufenden Funkteilnehmer an einen angerufenen Funkteilnehmer gerichtet ist. Dabei befindet sich der angerufene Funkteilnehmer in seinem Heimat-Mobilfunknetz ähnlich dem zu Figur 1 beschriebenen Verbindungsaufbau ist. Da sich beide Funkteilnehmer in demselben Mobilfunknetz aufhalten, genügt der Aufbau der Anrufverbindung über ein einziges Festnetz PS1' mit zugehöriger Vermittlungseinrichtung VE1', das im Land des Mobilfunknetzes PL1' ein öffentliches Fernsprechnetz darstellt. Bedingt durch mehrere Netzbetreiber eines Mobilfunknetzes PL1' in einem Land kann es vorkommen, daß nicht alle Mobilvermittlungsstellen zur Unterstützung der kompletten Funktionalität und des gesamten Dienstespektrums geeignet sind.

In diesem Fall erfolgt die Umleitung der Anrufverbindung durch die zentrale Teilnehmerdatenbasis HLR gemäß der zuvor beschriebenen Maßnahmen zu der Mobilvermittlungsstelle GMSC2 mit der dezentralen Teilnehmerdatenbasis VLR2 innerhalb des Mobilfunknetzes PL1'. Das Aussenden der Zusatzinformation RRI in der Anfrage PRN, die Speicherung der Zusatzinformation RRI und der Funkteilnehmerrufnummer MSISDN in der Teilnehmerdatenbasis VLR2, der Verweis auf die gespeicherten Informationen in der Mobiltätsnummern-Tabelle der Teilnehmerdatenbasis VLR2 und die bei Empfang einer Mobitätsnummer MSRN ausgelöste zweite Aufenthaltsabfrage SRI' mit anschließender Übermittlung der Mobilitätsnummer MSRN zur Lokalisierung des anrufenden Funkteilnehmers sowie die Herstellung einer Verbindung nach Empfang der Dienstekennung SCM zu der Dienstesteuerungseinheit SCP des intelligenten Netzes werden anschließend wie zuvor beschrieben ausgeführt.

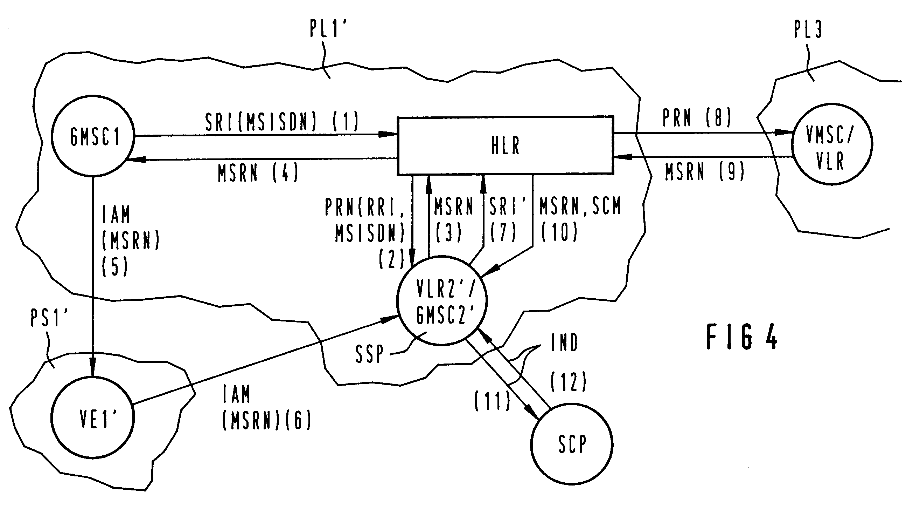

Das in Figur 4 dargestellte Prinzipschaltbild zeigt einen Verbindungsaufbau für eine Anrufverbindung ähnlich dem Prinzipschaltbild von Figur 2 mit der Ausnahme, daß der angerufene Funkteilnehmer sich nicht im Mobilfunktnetz PL1' sondern in dem Mobilfunknetz PL3 aufhält, oder daß die für den angerufenen Funkteilnehmer zuständige Mobilvermittlungsstelle zur Unterstützung des gesamten Dienstespektrums nicht geeignet ist. Daher wird eine Verbindung zu der das volle Dienstespektrum unterstützenden Mobilvermittlungsstelle GMSC2' mit zugehöriger dezentraler Teilnehmerdatenbasis VLR2' im Mobilfunktnetz PL1' aufgebaut, um nach Empfang der Mobilitätsnummer MSRN einen Dialog mit der Dienstesteuerungseinheit SCP des intelligenten Netzes führen zu können. Die erneute Aufenthaltsabfrage SRI' erfolgt ebenso aufgrund der zur eintreffenden Mobilitätsnummer MSRN gespeicherten Zusatzinformation RRI und enthält die für den angerufenen Funkteilnehmer vorgesehene internationale Funkteilnehmerrufnummer MSISDN. Der restliche Ablauf des Verbindungsaufbaus ist den zu Figur 2 beschriebenen Maßnahmen zu entnehmen.

## Patentansprüche

1. Verfahren zum Aufbau einer Anrufverbindung für Anrufe an einen Funkteilnehmer, bei dem mit der Funkteilnehmerrufnummer (MSISDN) des angerufenen Funkteilnehmers eine Aufenthaltsabfrage (SRI) von einer Vermittlungseinrichtung (GMSC1) in einem Kommunikationsnetz (PL1) eines anrufenden Teilnehmers an eine zentrale Teilnehmerdatenbasis (HLR) im Heimat-Mobilfunknetz (PL2) des Funkteilnehmers gerichtet wird, von der zentralen Teilnehmerdatenbasis (HLR) eine Anfrage (PRN) zur Übermittlung einer den Aufenthaltsort des angerufenen Funkteilnehmers kennzeichnenden Mobilitätsnummer (MSRN) an eine dezentrale Teilnehmerdatenbasis (z.B. VLR2) gestellt wird und bei dem die Mobilitätsnummer (MSRN) von einer Mobilvermittlungsstelle (z.B. GMSC2) zur zentralen Teilnehmerdatenbasis (HLR) und von dort zur abfragenden Vermittlungseinrichtung (GMSC1) rückgesendet wird,
**dadurch gekennzeichnet,**
- daß von der zentralen Teilnehmerdatenbasis (HLR) überprüft wird, ob von der abfragenden Vermittlungseinrichtung (GMSC1) ein mehrere Dienste umfassendes Dienstespektrum in seiner Gesamtheit unterstützt wird, und bei negativem Prüfergebnis die Anfrage (PRN), enthaltend eine Zusatzinformation (RRI) und die Funkteilnehmerrufnummer (MSISDN) des angerufenen Funkteilnehmers, an eine dezentrale Teilnehmerdatenbasis (z.B. VLR2) gerichtet wird, die zu einer das Dienstespektrum unterstützenden und zum Empfang ankommender Anrufe vorgesehenen Mobilvermittlungsstelle (z.B. GMSC2) gehört,
- daß von der dezentralen Teilnehmerdatenbasis (z.B. VLR2) die empfangene Zusatzinformation (RRI) und Funkteilnehmerrufnummer (MSISDN) gespeichert werden und eine Mobilitätsnummer (MSRN) mit einem Verweis auf die gespeicherte Zusatzinformation (RRI) und die gespeicherte Funkteilnehmerrufnummer (MSISDN) zur zentralen Teilnehmerdatenbasis (HLR) rückgesendet wird, und
- daß bei Empfang einer den Aufbau der Anrufverbindung auslösenden Nachricht (IAM) mit der auf die Zusatzinformation (RRI) verweisenden Mobilitätsnummer (MSRN) im Heimat-Mobilfunknetz (PL2) eine zweite Aufenthaltsabfrage (SRI') mit der gespeicherten Funkteilnehmerrufnummer (MSISDN) von der Mobilvermittlungsstelle (z.B. GMSC2) an die zentrale Teilnehmerdatenbasis (HLR) gerichtet und
mit der auf die erneute Aufenthaltsabfrage (SRI') bereitgestellte nMobilitätsnummer (MSRN) die Anrufverbindung aufgebaut wird.

2. Verfahren nach Anspruch 1,
**dadurch gekennzeichnet,**
daß bei Aufenthalt des angerufenen Funkteilnehmers in dessen Heimat-Mobilfunknetz (PL2) die Anfrage (PRN) mit der Zusatzinformation (RRI) an die für den Funkteilnehmer aktuell zuständige dezentrale Teilnehmerdatenbasis (VLR2) gerichtet wird, die zu einer das Dienstespektrum unterstützenden Mobilvermittlungsstelle (GMSC2) gehört.

3. Verfahren nach Anspruch 1,
**dadurch gekennzeichnet,**
daß bei Aufenthalt des angerufenen Funkteilnehmers in einem fremden Mobilfunknetz (PL3) oder in einem Aufenthaltsgebiet des Heimat-Mobilfunknetzes (PL2) mit eingeschränkter Unterstützung des Dienstespektrums durch die zugehörige Mobilvermittlungsstelle die Anfrage (PRN) mit der Zusatzinformation (RRI) an eine definierte dezentrale Teilnehmerdatenbasis (VLR2') im eigenen Mobilfunknetz (PL2) gerichtet wird, die zu einer das Dienstespektrum unterstützenden Mobilvermittlungsstelle (GMSC2') gehört.

4. Verfahren nach einem der vorhergehenden Ansprüche,
**dadurch gekennzeichnet,**
daß zur Überprüfung der abfragenden Vermittlungseinrichtung (GMSC1) auf Unterstützung des Dienstespektrums eine in der Aufenthaltsabfrage (SRI) übermittelte Adresse zur Kennzeichnung der Vermittlungseinrichtung des anrufenden Teilnehmers mit einer in der zentralen Teilnehmerdatenbasis (HLR) gespeicherten Adresse zur Kennzeichnung einer das Dienstespektrum unterstützenden Vermittlungseinrichtung verglichen wird.

5. Verfahren nach Anspruch 4,
**dadurch gekennzeichnet,**
daß zum Vergleich die zentrale Teilnehmerdatenbasis (HLR) eine Liste der Mobilvermittlungsstellen enthält, die das Dienstespektrum unterstützen.

6. Verfahren nach einem der vorhergehenden Ansprüche,
**dadurch gekennzeichnet,**
daß als Zusatzinformation (RRI) eine virtuelle internationale Funkteilnehmerrufnummer verwendet wird, die keinem realem Funkteilnehmer zuordenbar ist.

7. Verfahren nach einem Ansprüche 1 bis 6,
**dadurch gekennzeichnet,**
daß der anrufende Teilnehmer als Funkteilnehmer in einem anderen Mobilfunknetz (PL1) als dem Heimat-Mobilfunknetz (PL2) des angerufenen Funkteilnehmers registriert wird.

8. Verfahren nach einem der Ansprüche 1 bis 6,
**dadurch gekennzeichnet,**
daß der anrufende Teilnehmer als Funkteilnehmer im Heimat-Mobilfunknetz (PL1') des angerufenen Funkteilnehmers registriert wird.

9. Verfahren nach einem der vorhergehenden Ansprüche,
**dadurch gekennzeichnet,**
daß der angerufene Funkteilnehmer als Teilnehmer eines intelligenten Netzes registriert wird und daß von der das Dienstespektrum unterstutzenden Mobilvermittlungsstelle (z.B. GMSC2) im Heimat-Mobilfunknetz (PL2) des angerufenen Funkteilnehmers eine Dienstekennung (SCM) mit der Mobilitätsnummer (MSRN) zusammen empfangen und eine Verbindung zu einer Dienstesteuerungseinheit (SCP) des intelligenten Netzes zur Nutzung von Diensten im intelligenten Netz hergestellt wird.
